# EUROPEAN PATENT APPLICATION

(11) **EP 4 691 853 A1**
(43) Date of publication of application: **11.02.2026**
(21) Application number: 25382503.8
(22) Date of filing: 19.05.2025
(51) Int. Cl.: B60R 1/06, B60R 1/074, B60R 11/04

(54) **SYSTEM FOR ATTACHING AN INDIRECT VISION DEVICE TO A VEHICLE**

(30) Priority: 02.12.2024 EP 24383307
(71) Applicant: Ficosa Automotive, S.L.U., 08232 Viladecavalls, Barcelona (ES)
(72) Inventor: DEL VAL REDONDO, Ignacio, 08232 Viladecavalls, Barcelona (ES)
(74) Representative: Balder IP Law, S.L.

(57) **Abstract**

A system for attaching an indirect vision device to a vehicle, comprising: a base assembly (52) comprising a first stopper (5), the base assembly (52) configured to be attached to the vehicle; an arm (53) which comprises a second stopper (6), the arm (53) being configured to rotate with respect to the base assembly (52) at least between a first position (P1) and a second position (P2); a cover (4) being configured to be attached to and at least partially located between the base bracket (2) and the arm (53), wherein the cover (4) comprises a band (7) which surrounds at least partially the first stopper (5), wherein at the first position (P1) the second stopper (6) is away from the first stopper (5) and the band (7), and at the second position (P2) the second stopper (6) contacts the band (7), or wherein the cover (4) comprises a band (7) which surrounds at least partially the second stopper (6), wherein at the first position (P1) the first stopper (5) is away from the second stopper (6) and the band (7), and at the second position (P2) the first stopper (5) contacts the band (7).

## Description

### TECHNICAL FIELD

The present invention relates to a system for attaching an indirect vision device to a vehicle. The indirect vision device may preferably comprise any of a mirror, a camera, a lidar, a radar, a sensor, an environmental sensor, or a combination thereof.

### STATE OF THE ART

There are known indirect vision devices for vehicles, and there are also known conventional systems for attaching these devices to vehicles. Typically, these indirect vision devices comprise mirrors or electronic cameras or lidars which via which the driver may view towards behind or the side of the vehicle. Also, typically these devices are attached to a side of the vehicle via a corresponding system which in many cases allows for rotating the corresponding indirect vision device between a parking position and an operational position of the device. Usually, at the parking position, when compared to the operation position, the device is closer to a main body of the vehicle and is not optimally positioned for providing a desired view to the vehicle's driver, whereas at the operational position, compared to the parking position, the device is further away from the main body of the vehicle and is optimally positioned for providing the desired view to the driver. A problem with many of the known conventional systems for attaching indirect vision devices to vehicles is that for moving the corresponding device between the parking position and the operational position, the conventional systems involve moving parts which rotate relatively to each other. These moving parts, especially when they are metallic, as they rotate relative to each other, may collide, and their collision may result in the creation of noise, as well as in the deterioration and damage of these parts. Moreover, the aforementioned noise and deterioration may be particularly significant if the vehicle is exposed to adverse weather conditions such wind, rain, haze or mechanical vibrations imposed by the vehicle's possible movement on an uneven or rough terrain, because said adverse conditions may result to an increase of the possible collision events between the aforementioned rotating parts. Hence, there is a need for overcoming at least some of the drawbacks of said conventional systems.

### DESCRIPTION OF THE INVENTION

The present invention allows for overcoming at least some of the drawbacks of the conventional systems. In particular, the present invention allows for attaching an indirect vision device to a vehicle via a system which may advantageously be very durable and operationally reliable. Moreover, at least some embodiments of the present invention allow for reducing the noise that may be caused by the system during the latter's operation. Also, the present invention advantageously allows for reducing the system's deterioration that may be induced by the relative rotation of some moving parts within said system, and/or by the application of external loads or vibrations that may be applied to the system when the vehicle is exposed to winds, rain or haze, and/or when the vehicle is moving on an uneven or rough terrain. In addition, the present invention allows for creating a system which may be reliably manufactured at scale and at a relatively low financial cost, and which may be highly versatile in that it may be used in combination with a lot of different types of indirect vision systems and vehicles.

A first aspect of the invention concerns a system for attaching an indirect vision device to a vehicle, the system comprising a base assembly, an arm, and a cover. The base assembly comprises a first stopper. Preferably, the base assembly further comprises a base bracket, and more preferably a base cover. Also, the base assembly is configured to be (e.g., firmly) attached (directly or indirectly) to the vehicle. The arm comprises a second stopper, a housing and a housing bracket. Also, the arm is configured to support the indirect vision device and rotate with respect to the base assembly at least between a first position and a second position. The cover is attached to and at least partially located between the base assembly and the arm, preferably between the base bracket and the arm.

Also, the cover comprises a band which surrounds at least partially the first stopper. At the first position the second stopper is away from the first stopper and the band. At the second position the second stopper contacts the band which is at least partially between the first stopper and the second stopper. Alternatively, the band surrounds at least partially the second stopper. At the first position the first stopper is away from the second stopper and the band. At the second position the first stopper contacts the band which is at least partially between the second stopper and the first stopper. It may be understood that the aforementioned system of the first aspect of the invention may advantageously serve for attaching, mounting or supporting the indirect vision device to the vehicle, and said system may also be called any of "device", "mechanism", "mount", "assembly", "mounting system", "mounting mechanism", "bracket system" or "support structure" or another term of similar meaning.

The first and the second stopper may advantageously serve for limiting a relative rotation of the arm with respect to the base assembly, such that the relative rotation is blocked when the arm moving from the first to the second position reaches the latter. Preferably, the second position is or it is close to a parking position and the first position is an operational driving position, wherein when the base assembly is firmly and properly attached to the vehicle and the indirect vision device is supported by the arm, when the arm is at the parking position the indirect vision device is closer to a main body of the vehicle compared to what occurs when the arm is at the operational driving position. More preferably at the operational driving position the indirect vision device is positioned relatively to the vehicle such that the indirect vision device may provide to a driver of the vehicle a desired view. Hence, the first and second stopper may preferably be respectively positioned at the base assembly and the arm, such that they may advantageously limit the extent of the relative rotation of the arm with respect to the base assembly. However, in some preferred embodiments the second position is a fully closed/retracted/folded position of the system, and the first position is a driving position or a different one which may be between the fully folded position and the driving position.

The system of the first aspect of the invention is attachable to the vehicle via the base assembly which for this purpose preferably may be configured, e.g. shaped and/or comprising attachment means, for being firmly attached to a specific location on the vehicle's body. For this purpose, in a preferred embodiment the base assembly comprises orifices and screws via which the base assembly is attachable to a side part, or to a door, or to another location or part of the vehicle.

As mentioned further above, the cover which is attached to and at least partially located between the base bracket and the arm comprises a band which surrounds at least partially the first stopper or the second stopper. This band which is at least partially located between the first stopper and the second stopper may advantageously act for preventing a direct contact between the first stopper and the second stopper, and for protecting the first stopper from a collision with the second stopper as the arm moves from the first to the second position. Hence, the band may advantageously protect the first stopper or the second stopper and prevent the latter's damage during an operation of the system. Moreover, the band may advantageously reduce the noise produced by the collision of the first stopper with the second stopper when the arm moves to the second position with respect to the base assembly. In the absence of the band, said collision could be a direct one with the first stopper directly contacting the second stopper. However, the presence of the band may advantageously cause that said collision is an indirect one in which the first stopper indirectly contacts the second stopper due to the band being located and preventing the direct contact between the two stoppers. Hence, the band may advantageously absorb at least some of the shock of the collision, and act for reducing the noise and deterioration associated with that collision. Also, the cover that is at least partially located between the base assembly (e.g., the base bracket) and the arm may advantageously cause the following effects: close an opening that may be created by the base cover or the housing; reduce or avoid the risk of an accidental pinching or entrapment of a person's fingers by the system during a possible folding or an unfolding of the system; reduce the amount of water and dust that may enter in the base cover and base bracket or the housing and housing bracket of the system; reduce a wind-noise that may be created by air moving in the space between the base assembly and the arm.

In a preferred embodiment of the invention, the band is, i.e. has the form of, a ring. Preferably said ring is non-circular and/or asymmetrical. The optional feature of the band being, i.e. being shaped as, a ring advantageously may cause that the band is and remains firmly attached to the first stopper or the second stopper during an operation of the system, and may also improve the protection of the first stopper or the second stopper by the band, and facilitate the placement and attachment of the band around the first stopper or the second stopper when the system is assembled. The aforementioned possible non-circular and/or asymmetrical shape of said ring may, depending on the shape of the first stopper or the second stopper, advantageously facilitate that the ring conforms to an outer surface of the first stopper or of the second stopper to which the ring is attached, and may also optimize the protection of the first stopper or the second stoper by the ring when the second stopper moves to the second position and collides with the ring, or when the ring collides with the first stopper.

In a preferred embodiment of the invention, the band comprises a curved portion which curves outwards from the first stopper and is configured to contact the second stopper when the arm is at the second position. Preferably said curved portion is shaped such that there is a gap between the first stopper and the curved portion at least when the arm is at the first position. The aforementioned optional curved portion may advantageously act as a first point of contact between the band and the second stopper, such that the band's first portion may advantageously receive at least some of the mechanical stress that is possibly applied to the band and to the first stopper by the collision of the second stopper with the band when the second stopper moves to the second position. For this purpose, the aforementioned optional gap that may exist between the first stopper and the curved portion may advantageously allow the band to deform along said curved portion and around said gap when the second stopper is at the second position, such that other parts or portions of the band remain well attached and positioned around at least some of the first stopper when the second stopper is at the second position.

Alternatively, it is possible that the band comprises a curved portion which curves outwards from the second stopper and is configured to contact the first stopper when the arm is at the second position. Preferably said curved portion is shaped such that there is a gap between the second stopper and the curved portion at least when the arm is at the first position. The optional gap that may exist between the second stopper and the curved portion may advantageously allow the band to deform along said curved portion and around said gap when the second stopper is at the second position, such that other parts or portions of the band remain well attached and positioned around at least some of the second stopper when the second stopper is at the second position.

In a preferred embodiment of the invention, the cover comprises a first part and a second part which comprises the band, and the first part is made of a first material and the second part is made of a second material. Preferably said second material is softer and/or more flexible compared to the first material. In the latter preferred embodiment, the configuration wherein the cover's second part and the band therein are made of the second material which differs from the first material, may be particularly advantageous for a number of different functionalities that the cover may have. For example, with respect to the latter preferred embodiment, the second material from which the second part and the band may be made, may serve for absorbing the mechanical stress produced by the second stopper or the first stopper contacting the band between the first and second stopper when the arm is at the second position. For the same purpose, preferably said second material is softer and more flexible compared to the first material, such that the second part that is made from the second material may more efficiently absorb the aforementioned mechanical stress. Likewise, the second material, especially when is softer and more flexible compared to the first material, may advantageously serve for facilitating a deformation of the band, and for reducing the noise and deterioration that may be produced when the second stopper collides with the band. Also, in the latter preferred embodiment, the cover may be attached to the base assembly and to the arm via the first portion that is made of the first material. In the latter case, the first material is preferably harder than the second material such that the cover remains stably attached to the base assembly between it and the arm during the rotation of the arm with respect to the base assembly.

In some preferred embodiments of the invention, the cover comprises a main part, and the band is attached to, or is integrated with, the main part. Preferably, the main part and the band are made of different materials, and more preferably the band is made of a material that is more flexible and/or softer compared to a material of the main part.

In a preferred embodiment of the invention, the cover comprises a central aperture and a side aperture, and the band is located between the central aperture and the side aperture. In the latter case, the central aperture may advantageously serve for passing through the same attachment and rotation means, e.g. a screw or an axis or a bold or another similar component, that may be configured to attach the arm to the base assembly and to simultaneously allow the arm to rotate relatively to the base assembly. Also, in the latter embodiment the side aperture may advantageously serve for facilitating the pass of cable harness or other elements that may optionally be included in the system, such that the band which is located between the central aperture and the side aperture may be attached to at least part of the first stopper. Also, in the latter preferred embodiment, the cover preferably further comprises at least one supporting structure which supports and connects the band to the rest of the cover, and more preferably the band and the at least one structure are made of the same material. Via the aforementioned support structure, the band may advantageously be suspended from the rest of the cover such that, when the first stopper collides with the band, the latter may deform while remaining attached to the first stopper and while the rest of the cover remains attached to the base assembly.

In a preferred embodiment of the invention when the cover is attached to the first stopper, the first stopper protrudes from the base assembly and towards the arm. The latter configuration may advantageously facilitate the ease of assembly of the system, via enabling that when the system is assembled and the base assembly is attached to the arm, the first stopper is suitably positioned such that in conjunction with the second stopper may firmly limit the relative rotation of the arm with respect to the base assembly. For the same reason, in a preferred embodiment the first stopper extends through a loop formed by the band. The latter optional configuration wherein the band forms a loop through which the first stopper extends may further advantageously facilitate an assembly process of the system.

In a preferred embodiment of the invention when the cover is attached to the second stopper, the second stopper protrudes from the arm and towards the base assembly. The latter configuration may facilitate the ease with which the system may be assembled, via enabling that when the base assembly is attached to the arm, the second stopper is suitably positioned such that in conjunction with the first stopper may firmly limit the relative rotation of the arm with respect to the base assembly. Preferably, the second stopper also extends through a loop formed by the band. The latter optional configuration wherein the band forms a loop through which the second stopper extends may further advantageously facilitate an assembly process of the system.

In a preferred embodiment of the invention, the first position and the second position are along a circular path defined by a rotation of the arm when the latter rotates with respect to the base assembly. The latter configuration may advantageously allow for the overall system to be compact.

Preferably the base cover is attached to the base bracket and the cover. In a preferred embodiment of the invention, the base cover is attached to the base bracket. In the latter case, the base cover may advantageously protect the base bracket from damage and weather induced deterioration or corrosion, and improve the aerodynamics of the system. For this reason, preferably the base cover is configured to at least partially cover and fit onto the base bracket. Also, preferably the base cover is attached to the cover and located at least in part between the cover and the base bracket. In the latter case, more preferably the base cover and the cover may advantageously be shaped such that they may be fitly attached to each other such that combinedly they may advantageously create an aesthetic and aerodynamic profile, as well as protect the base bracket from damage and weather conditions such as rain, haze and snow. It is noted that in some preferred embodiments the base bracket is primarily made of metal, particularly aluminum, and the cover and the base cover are primarily made of one or more weather resistant plastics which may advantageously facilitate the protection of the base bracket by the base cover and the cover. As mentioned further above the cover of the system may advantageously cause the following effects: close an opening that may be created by the base cover; reduce or avoid the risk of an accidental pinching or entrapment of a person's fingers by the system during a possible folding or an unfolding of the system; reduce the amount of water and dust that may enter in the base cover and base bracket of the system; reduce a wind-noise that may be created by air moving in the space between the base assembly and the arm. Moreover, the cover may advantageously improve the aerodynamics of the system when the arm is at any of the first and second positions with respect to the base assembly, as well as when the arm is at other possible positions between the first position and the second position. Likewise, the base cover may advantageously serve for creating an aesthetic and aerodynamic profile along the base bracket.

In a preferred embodiment of the invention, the housing bracket and the base bracket are made of metal, and the cover is at least partially made of one or more polymers. Preferably the metal is or comprises aluminum. In the optional case that the housing bracket and the base bracket are made of metal, they may advantageously improve the structural stability and durability of the overall system, and they may provide for a firm support to the indirect vision device. In the optional case that the base bracket and the housing bracket are made of aluminum, they may advantageously be lightweight and weather resistant. Also, making the cover and the base cover from one or more polymers, especially weather resistant polymers, may advantageously improve their durability and weather resistance, and may also allow for the base cover and the cover to protect, at least to some extent, the base bracket from damage and weather induced corrosion. However, it is noted that optionally the cover as well as the base cover may also comprise one or more metallic elements, such as metal inserts.

In some preferred embodiments of the invention, the indirect vision device comprises any of a mirror, a camera, a lidar, a sensor or a combination thereof. The use of a mirror, a lidar and/or a camera together with the system of the first aspect of the invention may allow for providing to a driver of the vehicle a clear view towards a desired direction with respect to the vehicle. It is noted that in a preferred embodiment of the invention, the system comprises the indirect vision system. It is also noted that the vehicle may optionally be a self-driving vehicle, i.e. an autonomous vehicle, and/or a vehicle which is configured to be driven, i.e. is drivable, by a human driver or operator.

In some preferred embodiments of the invention, the first stopper is at the base bracket or at the base cover. Most preferably the first stopper is at the base bracket. In the latter case, the first stopper may be part of the base bracket such that the latter, via the first stopper, in conjunction with the second stopper may advantageously firmly block a further rotation of the arm when the latter upon moving from the first position to the second position reaches the second position.

In some preferred embodiments of the invention, the second stopper is at the housing or at the housing bracket. In the latter optional cases, the second stopper may be part of the housing or the housing bracket such that the housing or the housing bracket in conjunction with the first stopper may advantageously firmly block a further rotation of the arm when the latter upon moving from the first position to the second position reaches the second position.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Fig. 1 illustrates a part of a preferred embodiment of the invention.
Fig. 2 illustrates an exploded view of the preferred embodiment of Fig. 1.
Fig. 3A illustrates a view of a cross section of part of the embodiment of Fig.1 at a first position.
Fig. 3B illustrates a detail of the view shown in Fig 3A.
Fig. 3C illustrates a view of a cross section of part of the embodiment of Fig.1 at a second position.
Fig. 3D illustrates a detail of the view shown in Fig 3C.
Fig. 3E illustrates a similar view of Fig 3A, where a band surrounds at least partially a second stopper.
Fig. 3F illustrates a detail of the view shown in Fig 3E.
Fig. 4A illustrates a view of part of the embodiment of Fig.1.
Fig. 4B illustrates a detail of the part shown in Fig 4A.
Fig. 5A illustrates a view of part of the embodiment of Fig.1.
Fig. 5B illustrates a view of part of the embodiment of Fig.1.
Fig. 5C illustrates a detail of the part shown in Fig 5A.
Fig. 6A illustrates a view of part of the embodiment of Fig.1.
Fig. 6B illustrates a detail of the part shown in Fig 6A.
Fig. 7 illustrates an exploded view of a preferred embodiment of the invention.
Fig. 8 illustrates an exploded view of the embodiment of Fig. 7 in a state where some of the parts of the embodiment have been assembled together.
Fig. 9A illustrates a view of part of the embodiment of Fig.7 at a first position.
Fig. 9B illustrates a view of part of the embodiment of Fig.7.
Fig. 9C illustrates a detail of the part shown in Fig 9B.
Fig. 10A illustrates a view of part of the embodiment of Fig.7 at a second position
Fig. 10B illustrates a view of part of the embodiment of Fig.7.
Fig. 10C illustrates a detail of the part shown in Fig 10B

### DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings, showing embodiments according to the invention.

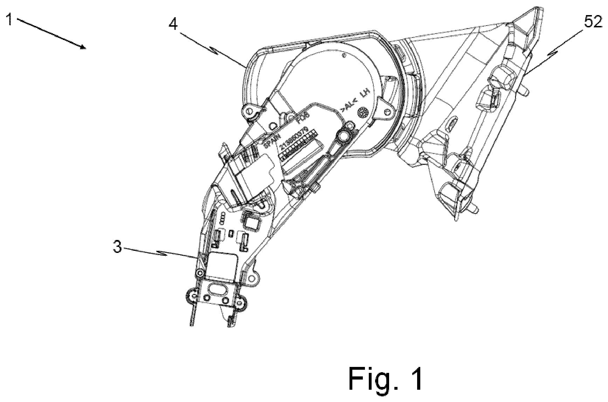

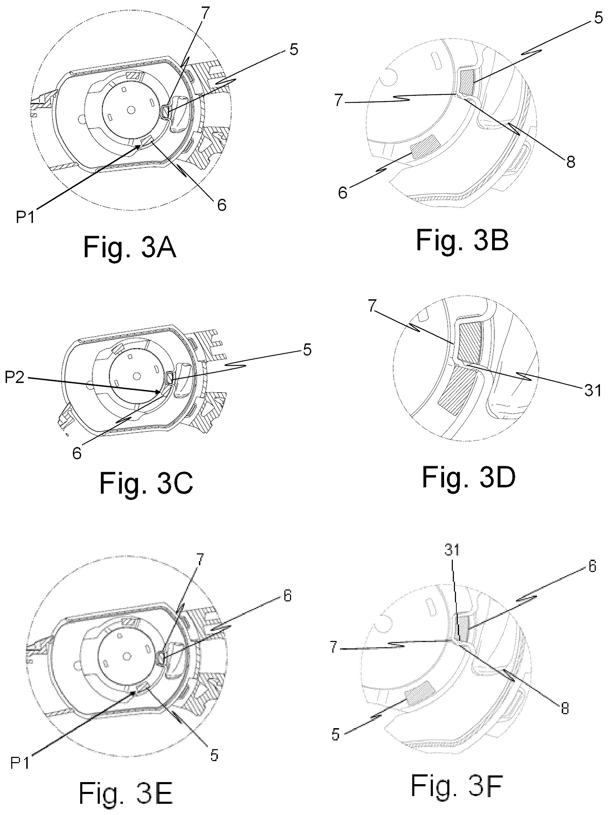

A preferred embodiment of a system according to the first aspect of the invention is explained next with reference to Fig. 1-6B. The system 1 of Fig. 1-6B may be used for attaching an indirect vision device, such as a mirror or camera, to a vehicle, particularly to a side of the vehicle. The system comprises a base assembly 52, an arm 53, and a cover 4. The base assembly 52 comprises a base bracket 2, a first stopper 5, and a base cover 9. Also, the base assembly 52 is configured to be firmly attached directly or indirectly to the vehicle at least via the base bracket 2. The arm 53 comprises a second stopper 6, a housing 10 and a housing bracket 3, and is configured to support the indirect vision device which may be attached directly or indirectly to the housing bracket 3. The cover 4 is attached to the base cover 9 and the base bracket 2. Also, the cover 4 is partially located between the base bracket 2 and the arm 53. Moreover, the cover 4 comprises a band 7 which partially surrounds the first stopper 5 as shown in Fig. 3A-3B. Alternatively, the cover 4 is attached to at least one of the housing 10 or the housing bracket 2, and the band 7 partially surrounds the second stopper 6 as shown in Fig 3E-F.

The arm 53 is configured to rotate with respect to the base assembly 52 at least between a first position P1 and a second position P2. The first position P1 and the second position P2 are along a circular path defined by a rotation of the arm 53 when the latter rotates with respect to the base assembly 52. When the arm 53 is at the first position P1 with respect to the base assembly 52, then the second stopper 6 is away from the first stopper 5 and the band 7, as shown in Fig. 3A and Fig. 3B. However, when the arm 53 is at the second position P2 with respect to the base assembly 52, as shown in Fig. 1, then as shown in Fig. 3C and Fig. 3D the second stopper 6 contacts the band 7 which is (i.e. is located) at least partially between the first stopper 5 and the second stopper 6. Hence, when the arm moves from the first to the second position and reaches the latter, the first stopper 5 together with the band 7 can block the rotation by colliding with the second stopper 6. However, in that collision, the second stopper 6 does not contact directly the first stopper 5, but instead it contacts the band 7 which hence protects the first stopper 5 from damage and may absorb at least some of the mechanical stress and reduce the noise and deterioration that are caused by the collision. It should be noted that in the embodiment of Fig. 1-6B the band 7 comprises a curved portion 8 which curves outwards from the first stopper 5 and is configured to contact the second stopper 6 when the arm 53 is at the second position P2. Also, the curved portion 8 is shaped such that there is a gap 31 between the first stopper 5 and the curved portion 8 at least when the arm 53 is at the first position P1. It is noted that in some other preferred embodiments of the invention, the band does not comprise the aforementioned curved portion 8.

In the embodiment of Fig. 3E-3F the band 7 comprises a curved portion 8 which curves outwards from the second stopper 6 and is configured to contact the first stopper 6 when the arm 53 is at the second position P2. Also, the curved portion 8 is shaped such that there is a gap 31 between the second stopper 6 and the curved portion 8 at least when the arm 53 is at the first position P1.

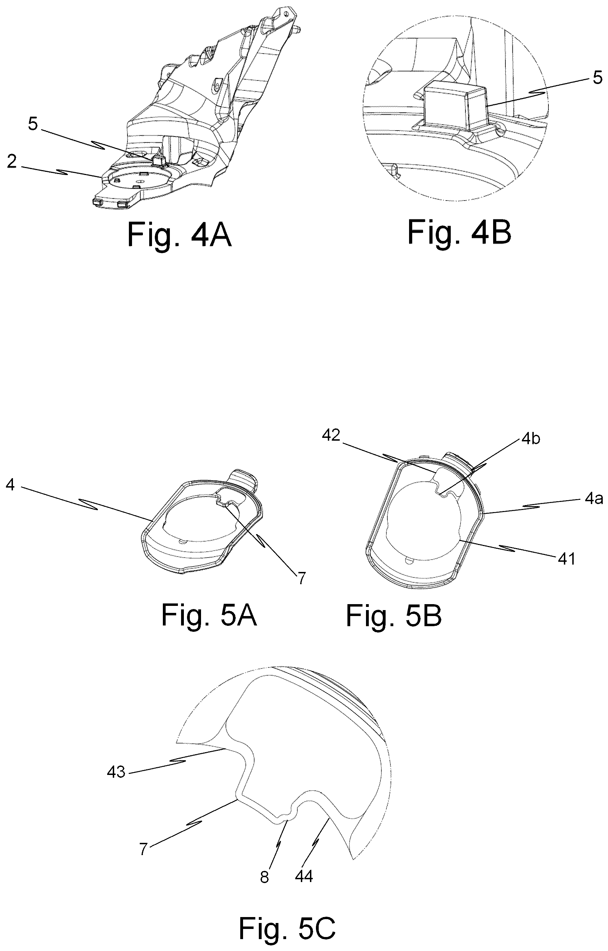

Also, in the embodiment of Fig. 1-6B, the cover 4, which is seen in some detail in Fig. 5A-5C, comprises a first part 4a and a second part 4b. The second part 4b comprises the band 7. The first part 4a is made of a first material and the second part 4b is made of a second material which is softer and more flexible compared to the first material. The first part 4a of the cover of the embodiment of Fig. 1-6B may also be called main part, and as shown in Fig. 5C the band 7 is attached to the main part. Moreover, as is illustrated by Fig. 5B-5C, the cover 4 comprises a central aperture 41 and a side aperture 42, and the band 7 is located between the central aperture 41 and the side aperture 42. Also, the cover 4, more specifically the aforementioned second part 4b of the cover 4, comprises two supporting structures 43, 44 which support and connect the band 7 to the rest of the cover. The band 7 and the two supporting structures 43, 44 are preferably made of the same material. It is noted that in some preferred embodiments which are similar to the embodiment of Fig. 1-6B, the first part 4a and the second part 4b are made of the same material.

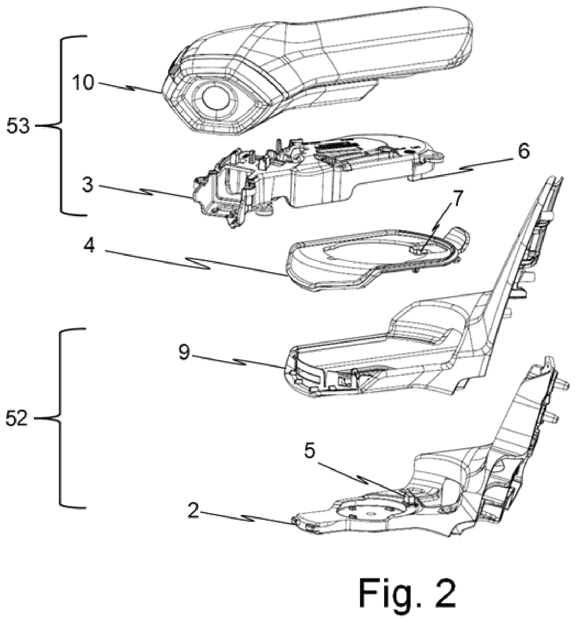

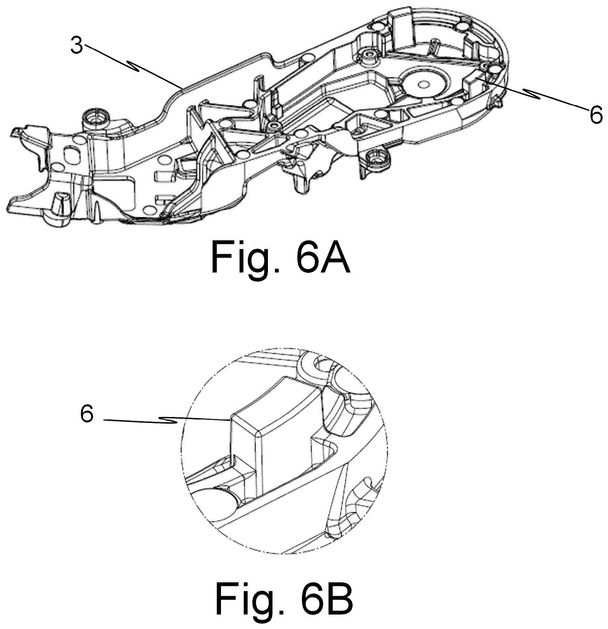

In the embodiment of Fig. 1-6B, the first stopper 5 is at the base bracket 2 as shown in Fig. 4A and Fig. 4B, and protrudes from the base assembly 52 and towards the arm 53, whereas the second stopper 6 is at the housing bracket 3, as shown in Fig. 6A and 6B, and protrudes from the arm 53 and towards the base assembly 52 as shown in Fig. 2. In examples, the first stopper 5 or the second stopper 6 extends through a loop formed by the band 7. It is noted that in the embodiment of Fig. 1-6B the housing bracket 3 and the base bracket 2 are made of metal which comprises aluminum, and the cover 4 is made of plastic.

In the embodiment of Fig. 1-6B, when the system is assembled the base cover 9 is fitted onto the base bracket 2, the cover 4 is fitted onto the base cover 9, the housing bracket 3 of the arm 53 is placed in the housing 10 which hence may protect the housing bracket 3 against the weather, and the arm 53 is attached to the base assembly 52. Hence, in the embodiment of Fig. 1-6B, the base cover 9 is attached to the base bracket 2 and to the cover 4.

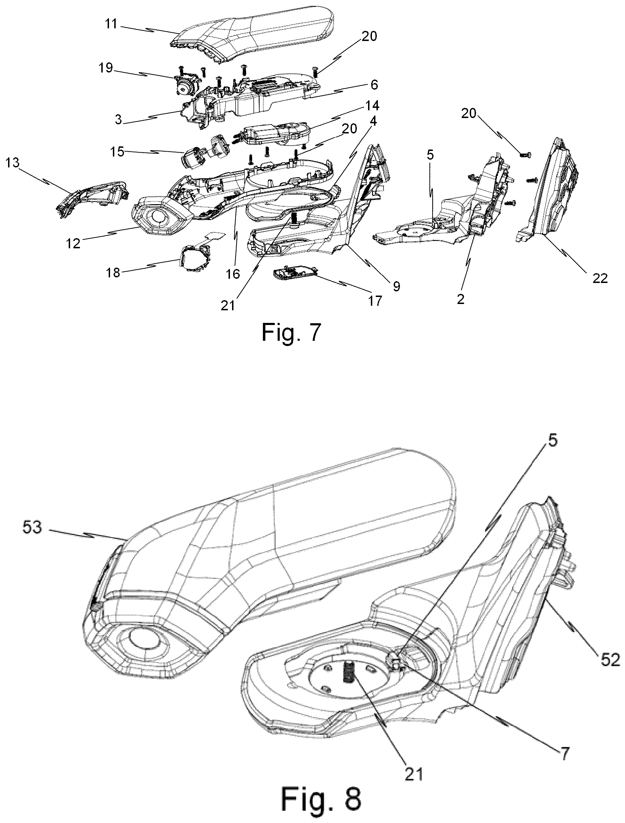

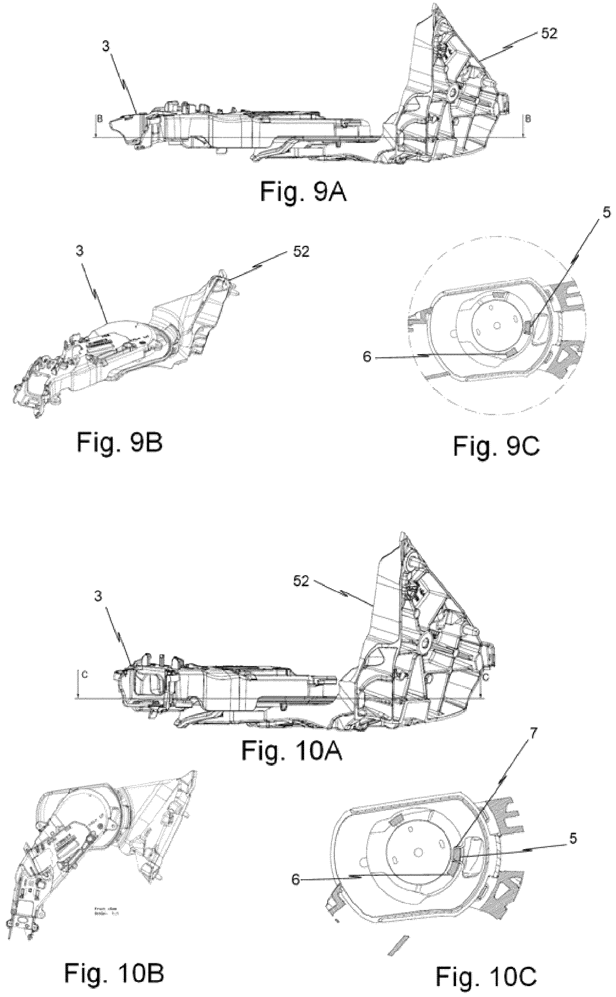

Another preferred embodiment of a system according to the first aspect of the invention is explained next with reference to Fig. 7-10C. The system of Fig. 7-10C is according to the one of Fig. 1, and further comprises an electronic indirect vision device which comprises a camera 19, an actuator 14 for rotating the arm 53 with respect to the base assembly 52, and a second camera 15 for providing a view towards the side of the vehicle. Also, in the embodiment of Fig. 7-10, the housing 10 of the arm 53 comprises a top part 11, a bottom part 16, a turn signal 13 (i.e. flashing light), a front part 12 and an additional part 18. The housing 10 encloses and protects the housing bracket 3, the camera 19, the actuator 14 and the second camera 15. Also, the camera 19, the actuator 14 and the second camera 15 are firmly attached to the housing bracket 3 via screws 20, and the camera 19 is pointed towards an optical aperture of the front part 12 of the housing 10 such that the camera 19 may, via the optical aperture, capture a view towards outside the housing 10. Also, when the system is assembled and is in operation, the housing 10 is firmly attached to the housing bracket 3 such that when the arm 53 rotates with respect to the base assembly 52, then the housing 10, the housing bracket 3 and the camera 19 follow the arm's rotation. The arm is attached to the base assembly 52 via the actuator 14 which acts as attachment and rotation means configured to keep the arm 53 attached to the base assembly 52, and to simultaneously allow the arm 53 to rotate with respect to the base assembly 52. In the embodiment of Fig. 7-10C, a first portion of the actuator 14 is fixed to the base assembly 52, and a second portion of the actuator 14 is fixed to the arm 53, and the second portion can rotate with respect to the first portion about a screw 21 via which the actuator 14 is attached to the base assembly 52. Hence, the screw 21 acts as a rotation axis for the actuator 14 and the arm 53. The arm 53 can rotate with respect to the base assembly 52 between at least a first position and a second position. Fig. 9A and Fig. 9B show the housing bracket 3 being at the first position with respect to the base assembly 52, and Fig. 9C illustrates that when the housing bracket 3 is at the first position, then the second stopper 6 is away from the first stopper 5 and the band 7. Also, Fig. 10A and Fig. 10B show the housing bracket 3 being at the second position with respect to the base assembly 52, and Fig. 10C illustrates that when the housing bracket 3 is at the second position, then the second stopper 6 contacts the band 7 which is at least partially placed, i.e. located, between the first stopper 5 and the second stopper 6. Also, in the embodiment of Fig. 7-10C, the base assembly 52 additionally comprises a bottom cover 17, and the base assembly 52 may be attached to a part 22 of the vehicle via suitable screws 20.

In Fig. 9C there is also shown a third stopper 91. This third stopper 91 may contact the band when the arm rotates to a third position, wherein the second position is between the first and the third position. This third stopper 91 is an optional element and serves for limiting the rotation of the arm 53. The third stopper 91 may preferably be at the base assembly 52 or at the arm 53.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A system for attaching an indirect vision device to a vehicle, comprising:
a base assembly (52) comprising a first stopper (5), the base assembly (52) configured to be attached to the vehicle;
an arm (53) which comprises a second stopper (6), and the arm (53) is configured to support the indirect vision device and rotate with respect to the base assembly (52) at least between a first position (P1) and a second position (P2); and
a cover (4) configured to be attached to and at least partially located between the base assembly (52) and the arm (53);
wherein the cover (4) comprises a band (7) which surrounds at least partially the first stopper (5), and wherein at the first position (P1) the second stopper (6) is away from the first stopper (5) and the band (7), and at the second position (P2) the second stopper (6) contacts the band (7) which is at least partially between the first stopper (5) and the second stopper (6); or
wherein the cover (4) comprises a band (7) which surrounds at least partially the second stopper (6), and wherein at the first position (P1) the first stopper (5) is away from the second stopper (6) and the band (7), and at the second position (P2) the first stopper (5) contacts the band (7) which is at least partially between the second stopper (6) and the first stopper (5).

2. A system according to any of the preceding claims, wherein the band (7) is a ring, preferably the ring being non-circular and/or asymmetrical.

3. A system according to any of the preceding claims, wherein the cover (4) comprises a first part (4a) and a second part (4b) which comprises the band (7), and the first part (4a) is made of a first material and the second part (4b) is made of a second material, preferably the second material being softer and/or more flexible compared to the first material.

4. A system according to any of the preceding claims, wherein the cover (4) comprises a central aperture (41) and a side aperture (42), and the band (7) is located between the central aperture (41) and the side aperture (42), preferably the cover (4) further comprising at least one supporting structure (43, 44) which supports and connects the band (7) to the rest of the cover, more preferably the band (7) and the at least one structure (43, 44) being made of the same material.

5. A system according to any of the preceding claims, wherein the cover (4) comprises a main part, and the band (7) is attached to or is integrated with the main part, preferably, the main part and the band (7) being made of different materials, more preferably the band (7) being made of a material that is more flexible and/or softer compared to a material of the main part.

6. A system according to any of the preceding claims, wherein the band (7) comprises a curved portion (8) which curves outwards from the first stopper (5) and is configured to contact the second stopper (6) when the arm (53) is at the second position (P2), preferably said curved portion (8) being shaped such that there is a gap (31) between first stopper (5) and the curved portion (8) at least when the arm (53) is at the first position (P1).

7. A system according to claims 1-5, wherein the first stopper (5) protrudes from the base assembly (52) and towards the arm (53), and preferably the first stopper (5) also extends through a loop formed by the band (7).

8. A system according to claims 1 to 7, wherein the base assembly (52) further comprises a cover (9) and a base bracket (2), wherein the cover (9) is attached to the base bracket (2), preferably the base cover (9) being further attached to the cover (4) and located at least in part between the cover (4) and the base bracket (2).

9. A system according to claims 1 to 8, wherein the first stopper (5) is at the base bracket (2) or at the base cover (9).

10. A system according to claims 1-5, wherein the band (7) comprises a curved portion (8) which curves outwards from the second stopper (6) and is configured to contact the first stopper (5) when the arm (53) is at the second position (P2), preferably said curved portion (8) being shaped such that there is a gap (31) between second stopper (6) and the curved portion (8) at least when the arm (53) is at the first position (P1).

11. A system according to claims 1-5 and 10, wherein the second stopper (6) protrudes from the arm (53) and towards the base assembly (52), and preferably the second stopper (6) also extends through a loop formed by the band (7).

12. A system according to claims 1-5 and 10-11, wherein the second stopper (6) is at the housing (10), or at the housing bracket (3).

13. A system according to any of the preceding claims, wherein the first position (P1) and the second position (P2) are along a circular path defined by a rotation of the arm (53) when the latter rotates with respect to the base assembly (52).

14. A system according to any of the preceding claims, wherein the indirect vision device comprises any of a mirror, a camera, a radar, a lidar, a sensor, or a combination thereof.

15. A system according to any of the preceding claims, wherein the housing bracket (3) and the base bracket (2) are made of metal, and the cover (4) is at least partially made of one or more polymers, preferably the metal being or comprising aluminum.
